# EUROPÄISCHE PATENTANMELDUNG

(11) **EP 1 947 038 A2**
(43) Veröffentlichungstag der Anmeldung: **23.07.2008**
(21) Anmeldenummer: 08000721.4
(22) Anmeldetag: 16.01.2008
(51) Int. Cl.: B65G 51/00, B65G 65/48

(54) **Vorrichtung zum Fördern von Heizpellets zum Ort ihrer Verbrennung**

(30) Priorität: 16.01.2007 DE 102007003093
(71) Anmelder: Leda Werk GmbH & Co. KG, 26789 Leer (DE); Beerschwinger, Ulrich, 85055 Ingolstadt (DE)
(72) Erfinder: Beerschwinger, Ulrich, Dr.-Ing., 85055 Ingolstadt (DE); Kirschner, Jochen, 85049 Ingolstadt (DE)
(74) Vertreter: Jabbusch, Matthias

(57) **Zusammenfassung**

Vorrichtung zum Fördern von stiftförmigen Heizpellets (5) zum Ort (7) ihrer Verbrennung, umfassend zumindest eine Pelletentnahmeeinrichtung (1) zum Entnehmen von Heizpellets aus einer Heizpelletschüttung (12) und umfassend zumindest eine Transporteinrichtung zum Verbringen der Heizpellets von der Pelletentnahmeeinrichtung zum Ort ihrer Verbrennung, wobei die Transporteinrichtung zumindest einen Schlauch (3) umfasst, dessen Innenweite etwas größer als der parallel zur Längsachse der Heizpellets ausgerichtete Querschnitt der Heizpellets ist, und die Heizpellets in achsparalleler Ausrichtung zur Längsmittelachse des Schlauches transportierbar sind.

## Beschreibung

Die Erfindung betrifft eine Vorrichtung zum Fördern von Heizpellets zum Ort ihrer Verbrennung, umfassend zumindest eine Pelletentnahmeeinrichtung zum Entnehmen von Heizpellets aus einer Heizpelletschüttung und umfassend zumindest eine Transporteinrichtung zum Verbringen der Heizpellets von der Pelletentnahmeeinrichtung zum Ort ihrer Verbrennung.

Im Zusammenhang mit der Beheizung von Gebäuden erlangt Holz als regenerativer Energieträger in zunehmenden Maße wieder an Bedeutung. Insbesondere die pelletierte Form als Holzpellets erlaubt einen automatischen Betrieb der Heizöfen und -Kessel.

Holzpellets bestehen aus häufig in zylindrische Stäbchen gepreßten Brennstoffen, insbesondere Holzspänen. Die für Heizöfen verwendeten Stäbchen haben üblicherweise einen Durchmesser von ca. 6 mm oder ca. 8 mm bei einer Länge von 5 bis 50 mm und sind genormt, z.B. DIN 51731. Die Holzpellets können auch andere Formen, beispielsweise eine Kugelform, aufweisen. Diese Formen ermöglichen den automatischen Transport aus einem geeigneten Lagerraum zur Verbrennungseinrichtung, z.B. einem Wohnraumofen. Als Lagerraum kann ein Lagerbunker oder ein Silo dienen, in dem die Pellets als Schüttgut bevorratet werden. Zweckmäßigerweise befindet sich der Lagerraum im Gebäude oder in gebäudenahen Erdtanks.

Die Austragung der Pellets aus dem Lagerraum erfolgt bisher von Hand, mittels Schwerkraft, Schneckensystemen und/oder Saugsystemen.

Bekannte Fördersysteme für Pelletheizungen basieren allgemein auf Schnecken- und Saugsystemen, die allesamt Rohrdurchmesser zwischen 50 und 120 mm aufweisen. Diese werden insbesondere für Pelletheizungskessel eingesetzt, die in der Nähe des Pelletlageraums installiert sind. Pelletkessel, die im Wohnraum aufgestellt sind - oft auch als Pelletöfen bezeichnet, werden bisher vorwiegend manuell befüllt (beispielsweise Sackware).

Nach dem Stand der Technik sind eine ganze Reihe von Transport- und Verteilersysteme für Heizpellets bekannt.

So offenbart die europäische Patentanmeldung EP 1 462 398 A1 eine Vorrichtung zum Fördern von Holzpellets aus einem Vorratsbehälter in eine Heizanlage, die einen Topf aufweist, in welchen die Holzpellets auf Grund ihrer Gewichtskraft aus dem Vorratsbehälter fallen. Darüber hinaus ist eine Förderleitung vorgesehen, welche den Topf direkt oder indirekt mit der Heizung verbindet. Angetrieben wird dieses System durch ein elektrisches Gebläse, welches einen starken Luftstrom erzeugt und dafür sorgt, daß die Holzpellets in die Heizanlage transportiert werden.

Die AT 003 734 U1 beschreibt eine Saugförderanlage für eine Heizanlage, die aus einer Saugturbine besteht, welche das Heizmaterial ansaugt und über einen Zyklonabscheider einem Heizkessel oder einem Zwischenlagerbehälter zuführt.

Die DE 201 14 275 U1 gibt ein Transport- und Verteilersystem für Heizpellets wieder, welches die Heizpellets (ähnlich wie in einer Rohrpostanlage) per Mini-Container in einem Rohrsystem durch Über- und Unterdruck transportiert. Die Transportbehälter werden mittels einer Schleuse aus dem Leitungssystem entfernt und über ein Fördersystem außerhalb des Rohrsystems mit Pellets befüllt. Bei Anforderung wird der gefüllte Transportbehälter in das Luftrohrsystem wieder eingeschleust und per Überdruck an das jeweilige Rohrende transportiert. Nach Beendigung der Entleerung des Transportbehälters wird dieser mittels Unterdruck an den Befüllungsort zurücktransportiert.

Die DE 200 01 470 U1 bezieht sich auf eine Rohrpostanlage mit Treibern, in Form von länglichen Körpern, wobei das Ladegut vor den Treibern oder in weitgehend offenen Treibern angeordnet ist.

Die derzeitigen Systeme sind vorwiegend aus der Landmaschinentechnik adaptiert und leiden generell unter folgenden Nachteilen:
Schnecken- und Spiralsysteme weisen in der Regel Pelletförderleitungen mit großen Durchmessern von 80 bis 100 mm auf. Im Falle von Wohnraumöfen ist der Lagerraum meistens räumlich getrennt untergebracht, so daß entsprechend große Decken- und/oder Wanddurchbrüche erforderlich sind. Diese verhältnismäßig großen Förderleitungen sind dann vor allem im Wohnbereich auffällig sichtbar und stellen eine nicht unwesentliche optische Beeinträchtigung dar. Diese Förderleitungen sind relativ starr und unflexibel. Auch flexible Spiralen benötigen Verlegeradien von ca. 1,5 m, wodurch die Anpassung an beengte Aufstellsituation besonders erschwert ist. Zudem ist die Antriebseinheit von Spiralsystemen aus funktionstechnischen Gründen am zugseitigen Ende der Spirale, also am Pelletofen im Wohnbereich angebracht, die eine deutliche akustische und optische Beeinträchtigung mit sich bringt. Teilweise wird für den Antriebsmotor ein Drehstromanschluß benötigt.
Saugsysteme benötigen eine Pelletförderleitung mit einem Durchmesser von ca. 50 mm und haben prinzipiell einen schlechteren Wirkungsgrad als Schnecken- /Spiralsysteme. Die Saugeinheit ist aus akustischen Gründen nicht im Wohnbereich aufgestellt. Dieses System erfordert daher zwei an den Pelletofen anzuschließende Saugleitungen und dementsprechend zwei Decken- und/oder Wanddurchbrüche. Der durch die Ansaugung entstehende Unterdruck im Vorratsbehälter des Pelletofens erfordert Maßnahmen zum Rückbrandschutz, die entweder den Einbau einer Schleuse erfordert oder eine Ansaugung während des Heizbetriebs ausschließt.

Allgemein führen beide Systeme zu einem erhöhten mechanischen Abrieb und zur Zerkleinerung der Heizpellets mit einer Zunahme des Staubanteils, wodurch der Betrieb des Pelletofens störanfälliger wird. Die großen und zum Teil unflexiblen Rohre lassen sich nur schwer an die räumlichen Gegebenheiten anpassen und erfordern einen hohen Installationsaufwand.

Der Erfindung liegt die Aufgabe zugrunde, eine Vorrichtung der eingangs genannten Gattung aufzuzeigen, mit der mit einfachen Mitteln ein sicherer Transport von Heizpellets zum Ort ihrer Verbrennung ermöglicht ist.

Diese Aufgabe ist erfindungsgemäß dadurch gelöst, daß die Transporteinrichtung zumindest einen Schlauch umfaßt, dessen Innenweite etwas größer als der Querschnitt der Heizpellets ist.

Die Erfindung ermöglicht die Verwendung relativ dünner und damit flexibler Schläuche oder Rohrleitungen. Die Innenweite, z. B. der Innendurchmesser, der Rohrleitung ist etwas größer als der Querschnitt der Pellets. Werden beispielsweise Pellets mit einem Querschnitt von 6 mm verwendet, so kann ein Schlauch mit einem Querschnitt von 7 bis 8 mm eingesetzt werden.

Ein geringer Rohrleitungsdurchmesser von z. B. 7mm bei kreisrunden Schläuchen ermöglicht geringere Verlegeradien und ermöglicht eine Installation auch bei sehr beengten Raumverhältnissen. Die Verlegung kann beispielsweise in Leerrohren und/oder unter Putz erfolgen. Erforderliche Decken- und Wanddurchbrüche können mit geringerem Aufwand (ohne Kernbohrung) erstellt werden. Eine Nachrüstung dieses Systems gestaltet sich damit einfacher und kostengünstiger.

Eine optische Beeinträchtigung im Wohnraum entfällt gänzlich. Ebenfalls gestaltet sich der Anschluß an den Pelletofen relativ unkompliziert und herstellerunabhängig.

Der verwendete Schlauch kann flexibel sein, es kann aber auch ein fester Abschnitt eines Schlauches vorgesehen sein, der dann wie eine Rohrleitung ausgebildet ist. Kugelförmige Pellets werden durch diese Schläuche bzw. Rohrleitungen geführt. Sind die Heizpellets stiftförmig ausgebildet, erfolgt ein Transport dieser Heizpellets in achsparalleler Ausrichtung zur Längsmittelachse des Schlauches.

Das Rohrmaterial kann zudem auch kostengünstig in transparenter Ausfertigung ausgeführt werden und erleichtert Rohrinspektion und Wartung. Die Kosten der Rohrleitung sind im Vergleich zu den bekannten Systemen geringer.

Durch den axial ausgerichteten und geordneten Transport der Pellets in der Rohrleitung wird die Interaktion der Pellets untereinander und damit deren mechanische Beanspruchung minimiert. Dies reduziert Abrieb, Zerkleinerung und Staubanteil. Das Fördersystem ist energieeffizienter.

Im Gegensatz zum bekannten pneumatischen Fördersystem (Saugförderung) ist keine doppelte Leitungsführung notwendig. Transport und Übergabe an den Tagesbehälter des Pelletofens gestalten sich auf Grund des hier beschriebenen Förderprinzips geräuschärmer. Zwei oder mehr parallel zueinander verlaufende Schläuche können gleichwohl vorgesehen sein, um eine Redundanz herzustellen. Sollte ein Schlauch einmal ausfallen, kann ein Transport der Heizpellets über eine parallele, als Beipass funktionierende Schlauchleitung erfolgen.

Im Gegensatz zum bekannten Schnecke/Spiralsystemen sitzt die Antriebseinheit nicht im Wohnraum, wodurch die akustische und optische Beeinträchtigung geringer ist.

Die Pelletförderung kann auch während des Pelletofenbetriebes erfolgen.

Nach einer Weiterbildung der Erfindung ist vorgesehen, daß die Pelletentnahmeeinrichtung eine Pelletvereinzelungseinrichtung und eine Übergabeeinrichtung zum Übergeben der Heizpellets aus der Pelletvereinzelungseinrichtung in den Schlauch umfaßt. Aus einer ungeordneten Heizpelletschüttung werden mit der Pelletentnahmeeinrichtung Pellets entnommen und in den Schlauch geführt. Die Pelletentnahmeeinrichtung weist dazu die Pelletvereinzelungseinrichtung auf, welche zunächst Heizpellets von anderen Heizpellets trennen kann und somit Heizpellets vereinzelt. Die vereinzelten Heizpellets werden dann mit der Übergabeeinrichtung in den Schlauch eingetragen.

Vorzugsweise umfaßt die Pelletvereinzelungseinrichtung eine drehbar gelagerte Walze, in dessen Mantelfläche parallel zur Walzenlängsmittelachse ausgerichteten Nuten angeordnet sind, wobei die Weite der Nuten etwas größer als die Außenmaße der Heizpellets ist. Einzelne Heizpellets können in den Nuten der Walze aufgenommen werden. Ein Heizpellet füllt eine derartige Nute nahezu vollständig aus, so daß kein weiteres Heizpellets in die Nute gelangen kann. Dadurch erfolgt die Vereinzelung.

Andere Pelletvereinzelungseinrichtungen können vorgesehen sein. Sie können z. B. eine Schwingfördereinrichtung zum Trennen und achsparallelen Ausrichten von Heizpellets umfassen. Auch ein Rohr mit innenliegenden Nuten kann verwendet werden.

Nach einer nächsten Weiterbildung der Erfindung ist vorgesehen, daß die Übergabeeinrichtung pneumatische oder mechanische Mittel umfaßt, welche die Pelletvereinzelungseinrichtung in die Heizpellets aus ihr herauslösender und in den Schlauch einführender Weise beaufschlagt. Die in den Nuten der Mantelfläche angeordneten Heizpellets werden von der Übergabeeinrichtung aus den Nuten herausgeholt und in den Schlauch eingeführt. Dies kann beispielsweise durch mechanische Anlage von Schiebewerkzeugen oder durch das Beaufschlagen der Heizpellets mit pneumatischen Kräften erfolgen. Die einzelnen Heizpellets können dabei durch eine Drehung des Zylinders jeweils vor die Mündung des Schlauches geführt werden, anschließend sind sie nur noch entlang ihrer Längsachse in den Schlauch einzubringen. Damit ist zugleich die erfindungsgemäße Ausrichtung der Heizpellets im Schlauch hergestellt. Die Pelletvereinzelungseinrichtung kann somit unmittelbar vor der Mündung des Schlauches angeordnet sein und die in der Pelletvereinzelungseinrichtung angeordneten Heizpellets können in den Schlauch eingeblasen oder eingesaugt werden.

Die Pelletsvereinzelungseinrichtung ist dabei vorzugsweise so aufgebaut, daß Luft ausschließlich in den Schlauch eingetragen wird. Jedes Heizpellet wird dabei vorzugsweise einzeln transportiert, es ist ständig mit Luft umspült, so daß es nicht an den Innenwänden des Schlauches anstößt. Auf diese Weise kann es auch um relativ enge Radien geführt werden.

Für den weiteren Transport der Heizpellets kann der Schlauch somit pneumatisch beaufschlagt sein. Die bei dem Transport der Heizpellets verwendete Transportluft kann vorzugsweise in das Innere des Pelletofens geführt werden. Damit wird dem Pelletofen Sauerstoff für die Verbrennung zugefügt, so daß unter Umständen auf eine konventionelle Zuführung von Verbrennungsluft zum Pelletofen verzichtet werden kann.

Die Zuführung der Pellets zum Pelletofen kann in einen Tagesbehälter führen. Es kann aber auch vorgesehen sein, den Tagesbehälter aus dem Pelletofen wegzulassen, um Heizpellets direkt in die Brennkammer zu bringen. Die jeweils benötigte Anzahl der Heizpellets kann unmittelbar aus dem Pelletvorrat entnommen werden und über den Schlauch oder über mehrere Schläuche in das Innere des Pelletofens verbracht werden. Mehrere Schläuche können dabei auch parallel nebeneinander betrieben werden, um die Menge der geförderten Pellets pro Zeiteinheit zu erhöhen.

Der Schlauch ist vorzugsweise aus einem elastischen und/oder transparenten Material gefertigt, wie oben angegeben.

Ein Ausführungsbeispiel der Erfindung, aus dem sich weitere erfinderische Merkmale ergeben, sind in der Zeichnung dargestellt. Es zeigen:
- Fig. 1:: eine schematische Seitenansicht einer Vorrichtung zum Fördern von stiftförmigen Heizpellets zum Ort ihrer Verbrennung, und
- Fig. 2:: eine perspektivische Ansicht eines Bauteils der Vorrichtung gemäß Fig. 1.

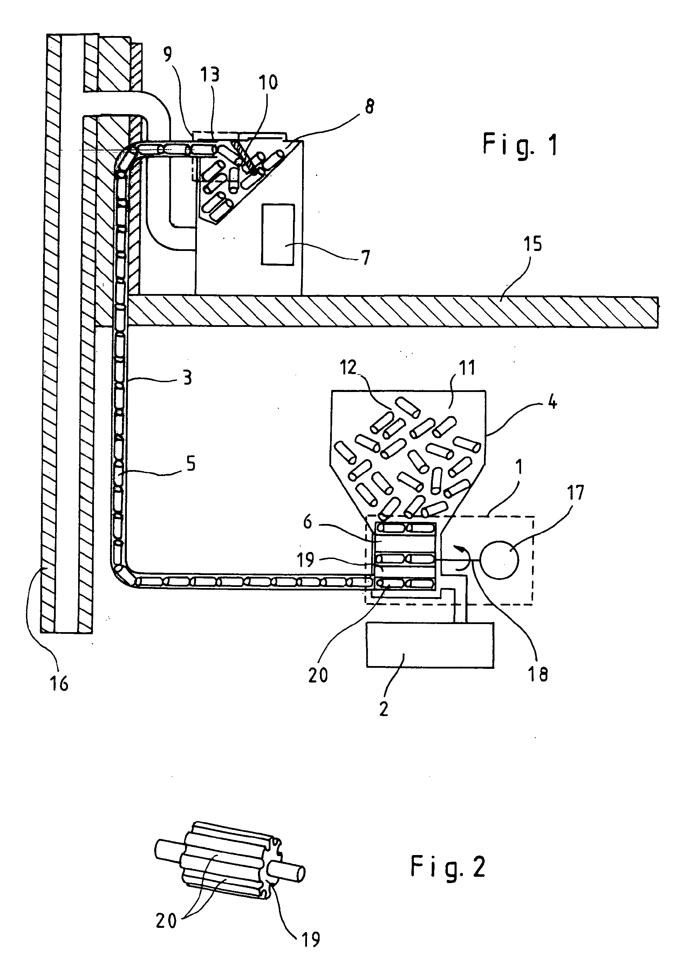

In Fig. 1 ist ein auf einem Raumboden 15 aufstehender Pelletofen 7 gezeigt. Dem Pelletofen 7 ist ein Kamin 16 zur Abfuhr entstehender Verbrennungsgase zugeordnet. Weiterhin ist dem Pelletofen 7 die erfindungsgemäße Vorrichtung zum Fördern von stiftförmigen Heizpellets 5 zugeordnet.

Die erfindungsgemäße Vorrichtung umfaßt eine Pelletentnahmeeinrichtung 1 und eine Transporteinrichtung. Die Pelletentnahmeeinrichtung 1 ist in einem Raum angeordnet, der von dem Raum mit dem Pelletofen 7 verschieden ist. Die Pelletentnahmeeinrichtung 1 ist unterhalb einer Pelletschüttung 12 angeordnet, wobei die Pelletschüttung 12 im Innenraum 11 eines Pelletlagers 4 angeordnet ist.

Die Pelletentnahmeeinrichtung 1 umfaßt eine Pelletvereinzelungseinrichtung 6 sowie eine Übergabeeinrichtung 2. Die Pelletvereinzelungseinrichtung 6 ist eine drehbar gelagerte Walze 19, in dessen Mantelfläche parallel zur Längsmittelachse ausgerichtete Nuten 20 angeordnet sind. In diesen Nuten 20 können Heizpellets 5 eingelegt werden, um sie anschließend mit Hilfe der Übergabeeinrichtung 2 in die Transporteinrichtung zu überführen. Dem Antrieb der drehbar gelagerten Walze 19 dient ein Elektromotor 17. Die Drehbewegung des Motors 17 wird über eine Welle 18 auf die Walze 19.

Die Walze 19 mit den eingelassenen Nuten 20 ist auch in Fig. 2 gezeigt.

Die Transporteinrichtung umfaßt einen Schlauch 3. Die Heizpellets 5 sind in achsparalleler Ausrichtung zur Längsmittelachse des Schlauches 3 in diesem transportierbar. Die Innenweite des Schlauches 3 ist etwas größer als der parallel zur Längsachse der Heizpellets 5 ausgerichtete Querschnitt der Heizpellets 5.

Der Schlauch 3 wird durch Wände hindurch bis zum Pelletofen 7 geführt. Er mündet in einen Tagesbehälter 8 des Pelletofens 7, bei 9 tritt er durch die Wandung des Pelletofens 7 hindurch. Mit 13 ist das Ende des Schlauches 3 bezeichnet, eine Prallplatte 10 ist diesem Ende 13 angenähert.

Mit der Pelletvereinzelungseinrichtung 1 kann eine Abtrennung nach Art einer Luftschleuse zwischen den Pelletlagerinnenraum 11 und dem Schlauch 3 erfolgen.

Im Bereich des offenen Endes 13 des Schlauches 3 kann noch eine Staubabscheideeinrichtung vorgesehen sein. Der am Ende 13 des Schlauches 3 austretende Luftstrom kann zudem gefiltert in den Wohnraum gelassen werden oder über eine zusätzliche Rohrleitung zu einem anderen Ort hin abgeführt werden oder als Vakuumsluft dem Pelletofen 7 zugefördert. Im Bereich des offenen Endes 13 kann zudem eine drehbar gelagerte Walze zur Übergabe der Heizpellets 5 vorgesehen sein.

## Patentansprüche

1. Vorrichtung zum Fördern von Heizpellets zum Ort ihrer Verbrennung, umfassend zumindest eine Pelletentnahmeeinrichtung zum Entnehmen von Heizpellets aus einer Heizpelletschüttung und umfassend zumindest eine Transporteinrichtung zum Verbringen der Heizpellets von der Pelletentnahmeeinrichtung zum Ort ihrer Verbrennung,
**dadurch gekennzeichnet,**
**daß** die Transporteinrichtung zumindest einen Schlauch (3) umfaßt, dessen Innenweite etwas größer als der Querschnitt der Heizpellets (5) ist.

2. Vorrichtung nach Anspruch 1, daß die Heizpellets (5) stiftförmig ausgebildet sind und daß die Heizpellets (5) in achsparalleler Ausrichtung zur Längsmittelachse des Schlauches (3) transportierbar sind.

3. Vorrichtung nach Anspruch 1 oder 2, **dadurch gekennzeichnet, daß** die Pelletentnahmeeinrichtung eine Pelletvereinzelungseinrichtung (1) und eine Übergabeeinrichtung (2) zum Übergeben des Heizpellets (5) aus Pelletvereinzelungseinrichtung (1) in den Schlauch (3) umfaßt.

4. Vorrichtung nach Anspruch 3, **dadurch gekennzeichnet, daß** die Pelletvereinzelungseinrichtung (1) zumindest eine drehbar gelagerte Walze (19) ist, in deren Mantelfläche parallel zur Walzenlängsmittelachse ausgerichtete Nuten (20) angeordnet sind, wobei die Weite der Nuten (20) etwas größer als die Außenmaße der Heizpellets (5) ist.

5. Vorrichtung nach Anspruch 3 oder 4, **dadurch gekennzeichnet, daß** die Übergabeeinrichtung (2) pneumatische oder mechanische Mittel umfaßt, welche die Pelletvereinzelungseinrichtung (1) in die Heizpellets (5) aus ihr herauslösender und in den Schlauch (3) einführender Weise beaufschlagt.

6. Vorrichtung nach Anspruch 5, **dadurch gekennzeichnet, daß** die Pelletvereinzelungseinrichtung (1) unmittelbar vor der Mündung des Schlauches (3) angeordnet ist und in der Pelletvereinzelungseinrichtung (1) angeordnete Heizpellets (5) in den Schlauch (3) eingeblasen bzw. eingesaugt werden.

7. Vorrichtung nach einem der vorhergehenden Ansprüche, **dadurch gekennzeichnet, daß** der Schlauch (3) pneumatisch beaufschlagt ist.

8. Vorrichtung nach Anspruch 7, **dadurch gekennzeichnet, daß** die für die pneumatische Beaufschlagung des Transportluftschlauches (3) eingesetzte Transportluft zum Ort der Verbrennung der Heizpellets (5) führbar ist.

9. Vorrichtung nach einem der vorhergehenden Ansprüche, **dadurch gekennzeichnet, daß** der Schlauch (3) aus einem elastischen Material gefertigt ist.

10. Vorrichtung nach einem der vorhergehenden Ansprüche, **dadurch gekennzeichnet, daß** der Schlauch (3) aus einem transparenten Material gefertigt ist.
